# EUROPEAN PATENT APPLICATION

(11) **EP 1 724 988 A1**
(43) Date of publication of application: **22.11.2006**
(21) Application number: 06252386.5
(22) Date of filing: 05.05.2006
(51) Int. Cl.: H04L 29/06, H04N 5/00, H04N 7/173

(54) **Content reproducing device and content reproducing method**

(30) Priority: 19.05.2005 JP 2005147113
(71) Applicant: SONY CORPORATION, Tokyo 141 (JP)
(72) Inventor: Yoneda, Michiaki, Tokyo 141 (JP); Kudo, Shigetaka, Tokyo 141 (JP)
(74) Representative: Leppard, Andrew John

(57) **Abstract**

Disclosed is a content reproducing device and a content reproducing method capable of eliminating confusions in reproduction manipulations. The present invention provides a content reproducing device that requests desired content data from a server storing content data and reproduces a content thereof while receiving the content data requested, which includes a communication section that requests desired content data from the server and receives the content data, a receive buffer that buffers the content data received by the communication section, a reproduction section that reads the content data buffered in the receive buffer and reproduces a content thereof, and a control section that controls reproduction of the content, wherein when the desired content data is requested from the server, the control section requests content data of a specified range, and limits a reproduction function for the content, based on a response from the server to the request.

## Description

The present invention relates to a content reproducing device and content reproducing method.

In related art, there has been a reproducing system in which a client device (hereinafter referred to simply as a client) requests a content stored in a server device (hereinafter referred to simply as a server) via a network. Data of the content requested by the client is received from the server, and the client reproduces the content.

In this kind of reproducing system, in streaming playback by which the client reproduces a content while receiving the data thereof, pausing playback of the content is realized in such a manner that the server stops transmission immediately before an image packet to pause. Release of the pause is realized by restarting transmission from the paused image packet (for example, see Jpn. Pat. Appln. Laid-Open Publication No. 2004-274619).

According to the technique described in the publication No. 2004-274619, a server can transmit data from a paused position even if an instruction to release pause is received from a client. However, all the servers cannot transmit data of a specified range. If a client requests data of a specified range from a server which cannot transmit data of a specified range, the server stops transmission of data or transmits data from the beginning of a corresponding content, causing a user enjoying the content to become confused how to operate reproduction by the client.

Embodiments of the present invention seek to overcome the problem as described above, and it is desirable to provide a content reproducing device and a content reproducing method which are capable of eliminating confusions in reproduction operations.

Therefore, according to a first aspect of the present invention, there is provided a content reproducing device that requests desired content data from a server storing content data and reproduces a content thereof while receiving the content data requested, the content reproducing device including: a communication section that requests desired content data from the server and receives the content data; a receive buffer that buffers the content data received by the communication section; a reproduction means for reading the content data buffered in the receive buffer and reproducing a content thereof; and a control means for controlling reproduction of the content, wherein when the desired content data is requested from the server, the control means requests content data of a specified range, and limits a reproduction function for the content, based on a response from the server to the request.

Also according to a second aspect of the present invention, there is provided a content reproducing method for a content reproducing device including a communication section that requests desired content data from a server storing content data and receives the content data, a receive buffer that buffers the content data received by the communication section, a reproduction means for reading the content data buffered in the receive buffer and reproducing a content thereof, and a control means for controlling reproduction of the content, wherein when the desired content data is requested from the server, the content reproducing device requests content data of a specified range, and limits a reproduction function for the content, based on a response from the server to the request

In embodiments of the present invention, content data of a specified range is requested when desired content data is requested from a server. Based on a response from the server to the request, a reproduction function for the content is limited. Therefore, user's confusion about reproduction manipulations can be eliminated.

Embodiments of the present invention relates to a content reproducing device and a content reproducing method which have a communication function based on, for example, TCP/IP (Transmission Control Protocol/Internet Protocol) and reproduce contents such as music and the like.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:
FIG 1 is a block diagram showing configuration of a content reproducing system;
FIG 2 is a table showing an example of information concerning contents;
FIG 3 is a diagram schematically showing processings of a providing section which provides music contents;
FIGS. 4A and 4B are views graphically showing read/write operations of a receiving ring buffer; and
FIG 5 is a flowchart showing a processing to limit reproduction manipulations.

A specific embodiment of the present invention will now be described in detail below with reference to the drawings. A content reproducing system given as a specific example includes a server and a client connected to each other via a network. The server delivers contents, and the client reproduces the contents. In particular, the system is based on a streaming playback in which the client reproduces content data while receiving the data, by use of network protocols called TCP (Transmission Control Protocol) /IP (Internet Protocol).

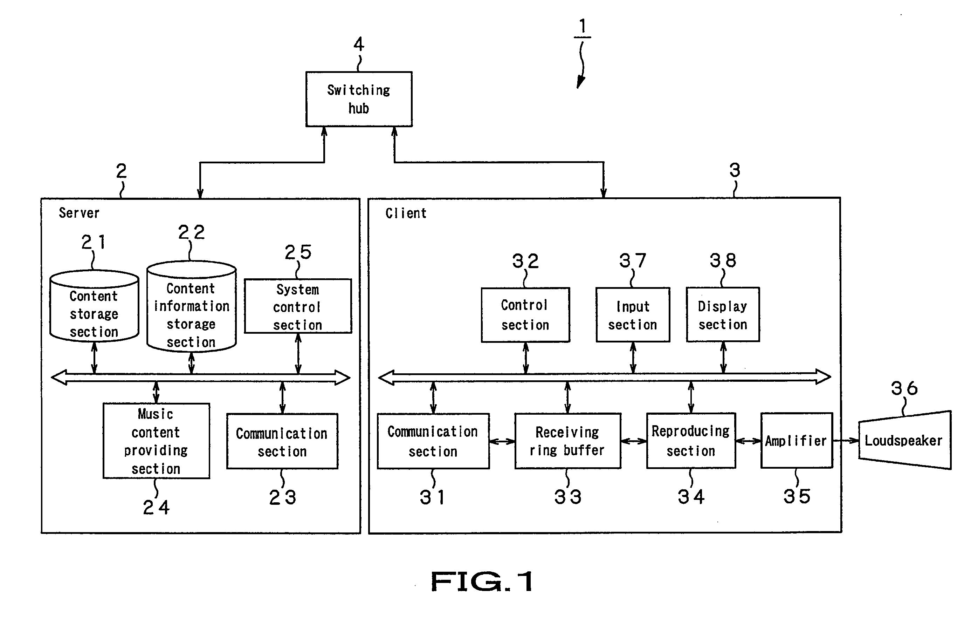

FIG. 1 is a schematic diagram showing a content reproducing system according to an embodiment of the present invention. This embodiment will be described as a system which reproduces music contents. The content reproducing system 1 includes a server 2 which stores music contents, a client 3 which reproduces the music contents, and a switching hub 4 which relays communication between the server 2 and the client 3. The content reproducing system 1 is connected by a LAN (Local Area Network) and performs communication according to TCP/IP. The TCP/IP divides network configuration into five hierarchical layers, i.e., a physical layer, network interface layer, internetwork layer, transport layer, and application layer. A network management method is settled for every layer.

The internetwork layer defines a mechanism which transfers packets toward a final address from a particular device, and also defines the format of packets transmitted via the intemetwork. The packets transmitted via the internetwork are called IP packets. Each IP packet is constituted by an IP header and a data part. A transmission destination IP address and a transmission source IP address are described in the IP header. Based on these IP addresses, packets are transferred between the server 2 and the client 3.

The server 2 includes a content storage section 21, a content information storage section 22, a communication section 23, a music content providing section 24, and a system control section 25. The content storage section 21 stores music contents. The content information storage section 22 stores content information concerning music contents. The communication section 23 performs communication with the client 3. The music content providing section 24 provides music content providing service. The system control section 25 performs control of the whole server 2.

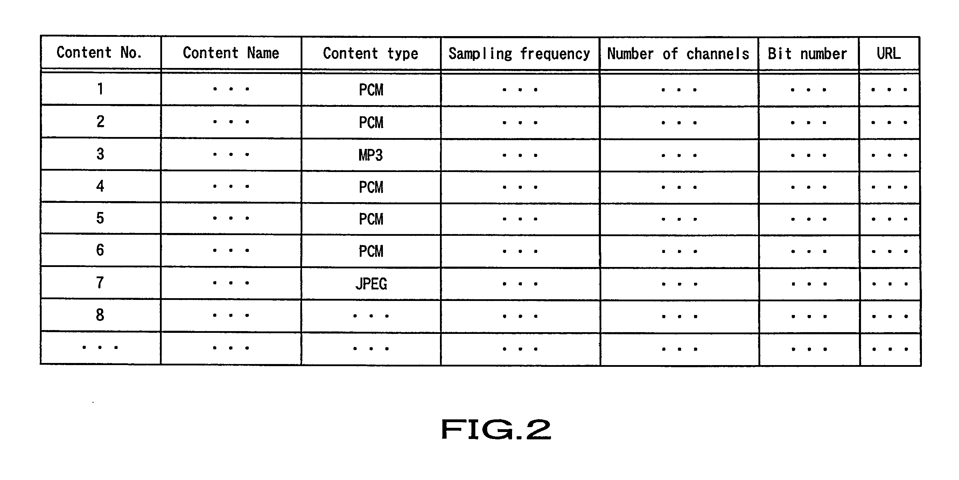

The content storage section 21 stores music contents. Information concerning plural music contents stored in the content storage section 21 is stored in the content information storage section 22. As shown in FIG 2, names of the music contents, content types as formats of contents, sampling frequencies, numbers of channels, bit numbers, reproduction time lengths of the music contents, URLs of the music contents, and the like are described.

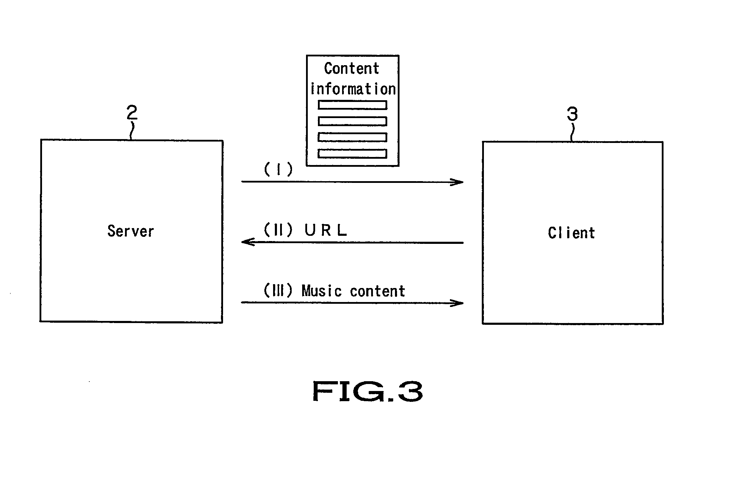

The music content providing section 24 provides the client 3 with the music contents stored in the content storage section 21. FIG 3 schematically shows processings performed by the music content providing section 24. The music content providing section 24 first reads content information from the content information storage section 22. This content information is transmitted to the client 3 through the communication section 23 (I). URLs of music contents to be reproduced are written in the content information. The client 3 selects music contents to reproduce, from the content information, and transmits the URLs of the music contents to the server 2 (II). The music content providing section 24 reads out music contents, based on the URLs received from the client 3, and transmits the music contents to the client 3 (III).

The client 3 includes a communication section 31, a control section 32, a receiving ring buffer 33, a reproducing section 34, an amplifier 35, an input section 37, and a display section 38. The communication section 31 performs communication with the server 2. The control section 32 requests necessary data from the server 2 and controls reproduction thereof The receiving ring buffer 33 temporarily stores music contents inputted from the server 2. The reproducing section 34 has a converter to convert a digital signal of a music content received from the server 2 into an analog signal. The amplifier 35 outputs an analog music signal to a loudspeaker 36. The input section 37 is constituted by keys or a remote controller to accept a manipulation input from a user such as a reproduction, stop, pause or the like.

The client 3 receives music contents from the server 2 and converts the digital signal of the received music contents into an analog signal, and reproduces the analog signal through the loudspeaker 36. The music contents transmitted from the server 2 are buffered in the receiving ring buffer 33. After a constant volume of the music contents is buffered in the receiving ring buffer 33, the music contents are outputted to the reproducing section 34. As a result of this, while music contents are being reproduced, sequential reproduction is achieved seamlessly between songs. The reproducing section 34 converts a digital music signal according to a PCM (Pulse Code Modulation) method into an analog music signal, and outputs the analog music signal to the amplifier 35. The analog music signal is amplified by the amplifier 35 and is then outputted from the loudspeaker 36.

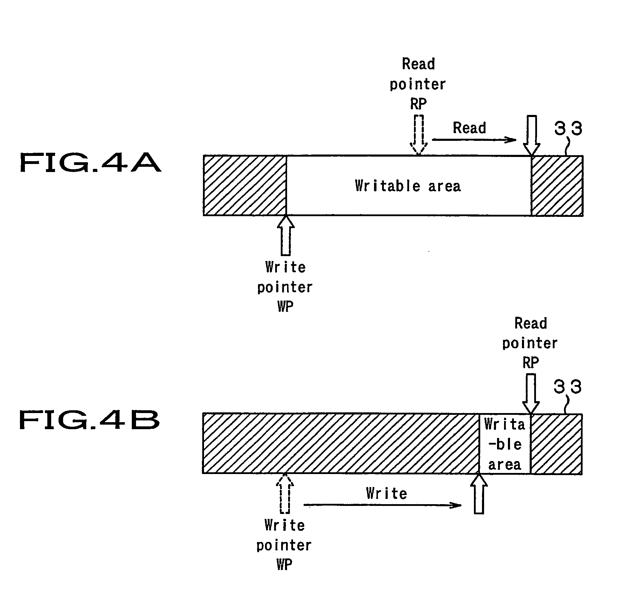

FIGS. 4 show write/read operations performed by the receiving ring buffer 33. A write pointer and a read pointer are set in the receiving ring buffer 33. FIG 4A shows a state of read operation. Data reading is performed at even intervals, and music contents are outputted to the reproducing section 34 at a constant speed. After a music content is read by a read pointer, the area is made writable. FIG 4B shows a state of write operation. In write operation, the write pointer moves within a writable area. If the writable area decreases, receiving of a signal is waited for until read operation proceeds. As a result of this, dependence on the communication speed can be reduced.

The switching hub 4 analyzes packets sent from the server 2 or client 3, detects an address, and transmits the packets to the server 2 or client 3.

Described next will be reproduction performed by the content reproducing system 1. At first, the control section 32 obtains content information from the server 2, and displays the content information on the display section 38. A user selects a song which the user wants to reproduce, from the displayed content information, and instructs reproduction by means of the input section 37. The control section 32 requests content data of the song from the server 2, about which the server 2 has received a reproduction instruction. The server 2 reads the content data of the song requested by the client 3 from the content storage section 21, and delivers the data to the client 3. The client 3 writes, into the receiving ring buffer 33, the content data delivered in units of packets from the server 2. In a stage after writing of a reproducible constant volume of content data is completed, reproduction is started. Thus, the client 3 reproduces a content while receiving content data.

Meanwhile, there has been a case that a manipulation intended by a user is not executed in the content reproducing system 1 if the user uses a reproduction function such as seek or pause. Embodiments of the present invention are hence configured to switch ON and OFF of a reproduction function such as seek or pause of the client 3, corresponding to the server 2 or music contents stored in the server 2. Seek always accompanies an operation of moving a head to a target position, such as a forwarding, rewinding or track change. Pause means a pause by which content data is buffered in the receiving ring buffer 33. As soon as the pause is released, reproduction is restarted immediately.

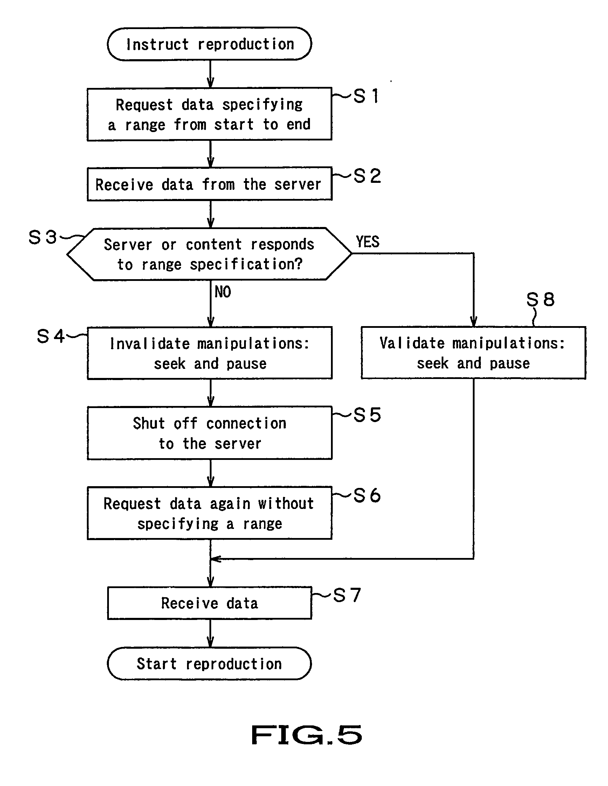

Described next will be a processing of restricting reproduction function corresponding to the server 2 or music contents stored in the server 2 with reference to a flowchart shown in FIG 5.

When a reproduction instruction to reproduce a music content is received from a user, the control section 32 requests data from the server 2, specifying content data of a range from start to end of the music content (step S1). The server 2 transmits data in response to the request from the client 3, and the client 3 receives the content data (step S2). The server 2 then delivers content data of the range from start to end if the server 2 can respond to the request from the client 3. Otherwise, if the server 2 cannot respond to the request, the server 2 answers that the server 2 cannot respond to the request. For example, in case of HTTP 1.0, a response code 406 or Accept-Ranges: None is returned. There may also be a different server 2 which may stop transmission of data or transmit content data from the beginning of a content regardless of a requested range if the server 2 cannot respond to the request Thus, the server 2 can respond variously.

In step S3, whether or not the server 2 and the data content are capable of accepting transmission of data of a specified range to the client 3 is determined based on data received from the server in step S2. For example, if a constant time period passes due to reply data indicative of incapability of responding to a request or due to stop of data transmission by the server 2, range specification of data is regarded as being not acceptable. If content data from a requested start position is received, range specification is regarded as being acceptable.

If the server 2 and the music content are determined in step S3 to be not capable of accepting range specification, the control section 32 invalidates manipulations such as seek and pause (step S4). This is because reproduction functions such as seek and pause are operations which accompany range specification of data. As a result of this, the user cannot execute manipulations such as seek and pause, which request data, specifying a range. Further, the control section 32 shuts off the connection to the server once (step S5), and requests content data again without specifying a range (step S6). The server 2 transmits the requested content data. The client 3 receives this content data (step S7), and starts reproduction. In this reproduction, reproduction functions such as seek and pause are invalidated because the server 2 and the music content are not compatible with range specification of data. Therefore, the user can manipulate the reproduction without confusion.

If the server 2 and the music content are determined in step S3 to be capable of accepting data range specification, the control section 32 validates manipulations such as seek and pause (step S8). The client 3 receives data of the content whose range can be specified (step S7), and starts reproduction. In this reproduction, manipulations such as seek and pause are available because content data whose range has been specified by the client 3 can be received from the server 2.

In step S3, the control section 32 preferably works as follows. That is, the control section 32 firstly determines whether the server 2 containing music contents responds to range specification of data or not. If the server 2 responds to range specification of data, it is preferable that the control section 32 secondly determines whether a music content stored in the server 2 responds to range specification of data.

Thus, reproduction functions such as seek and pause are switched on and off in accordance with whether the server 2 or music content responds to transmission of data of the range specified by the client 3 or not. As a result, user's confusion about reproduction manipulations can be eliminated.

In the above embodiment, reproduction functions such as seek and pause are switched on and off in accordance with a reply from the server to a request for data of a range specified by the client 3. However, if reproduction manipulations such as seek and pause are invalidated and the server 2 and music content are determined to be capable of accepting range specification when the client 3 requests data of a specified range, reproduction functions such as seek and pause can be validated.

Also in the above embodiment, content data is requested specifying a range from start to end, and whether the server 2 is capable of accepting range specification of data or not is determined. However, data may be requested specifying a part of the beginning of a content, and whether the server and the music content are capable of accepting range specification or not may be determined. As a result of this, although there may be a case that the server 2 and the music content are not capable of accepting range specification, even such a server 2 that transmits content data from the start of the data can deal with this case.

Although the communication method of the content reproducing system 1 described above follows the TCP/IP, another communication method may be used. Also the embodiment described above is configured to convert content data received from a server into an analog signal by the converter of the reproducing section 34. However, this configuration may be arranged so as to receive encoded content data from the server 2 and decode and convert the data into an analog signal.

The present invention is not limited to the embodiment described above but can be applied to another reproducing device for video contents.

Embodiments provide a content reproducing device and a content reproducing method capable of eliminating confusions in reproduction manipulations. Embodiments provide a content reproducing device that requests desired content data from a server storing content data and reproduces a content thereof while receiving the content data requested, which includes a communication section that requests desired content data from the server and receives the content data, a receive buffer that buffers the content data received by the communication section, a reproduction section that reads the content data buffered in the receive buffer and reproduces a content thereof and a control section that controls reproduction of the content, wherein when the desired content data is requested from the server, the control section requests content data of a specified range, and limits a reproduction function for the content, based on a response from the server to the request.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A content reproducing device that requests desired content data from a server storing content data and reproduces a content thereof while receiving the content data requested, the content reproducing device comprising:
a communication section that requests desired content data from the server and receives the content data;
a receive buffer that buffers the content data received by the communication section;
reproduction means for reading the content data buffered in the receive buffer and reproducing a content thereof; and
control means for controlling reproduction of the content, wherein
when the desired content data is requested from the server, the control means requests content data of a specified range, and limits a reproduction function for the content, based on a response from the server to the request.

2. The content reproducing device according to claim 1, wherein the control means determines whether or not the server is capable of responding to a request for the content data of the specified range, based on a response from the server.

3. The content reproducing device according to claim 2, wherein if the server is determined to be capable of responding to the request for the content data of the specified range, the control means further determines whether or not the content stored in the server is capable of responding to the request for the content data of the specified range.

4. The content reproducing device according to claim 2, wherein if the server is determined to be not capable of responding to the request for the content data of the specified range, the control means invalidates a predetermined reproduction function, and requests the content data without specifying a range.

5. A content reproducing method for a content reproducing device including a communication section that requests desired content data from a server storing content data and receives the content data, a receive buffer that buffers the content data received by the communication section, reproduction means for reading the content data buffered in the receive buffer and reproducing a content thereof, and control means for controlling reproduction of the content, wherein
when the desired content data is requested from the server, the content reproducing device requests content data of a specified range, and limits a reproduction function for the content, based on a response from the server to the request.

6. A content reproducing device that requests desired content data from a server storing content data and reproduces a content thereof while receiving the content data requested, the content reproducing device comprising:
a communication section that requests desired content data from the server and receives the content data;
a receive buffer that buffers the content data received by the communication section;
a reproduction section that reads the content data buffered in the receive buffer and reproduces a content thereof; and
a control section that controls reproduction of the content, wherein
when the desired content data is requested from the server, the control section requests content data of a specified range, and limits a reproduction function for the content, based on a response from the server to the request
